# EUROPÄISCHE PATENTSCHRIFT

(11) **EP 0 998 638 B1**
(45) Veröffentlichungstag und Bekanntmachung des Hinweises auf die Patenterteilung: **01.10.2003**
(21) Anmeldenummer: 99952109.9
(22) Anmeldetag: 14.05.1999
(51) Int. Cl.: F16F 15/134

(54) **VORRICHTUNG ZUM DÄMPFEN VON SCHWINGUNGEN, INSBESONDERE SCHWINGUNGSTILGER**
DEVICE FOR ABSORBING OSCILLATIONS, ESPECIALLY AN OSCILLATION DAMPER
DISPOSITIF POUR AMORTIR DES OSCILLATIONS, NOTAMMENT AMORTISSEUR D'OSCILLATIONS

(30) Priorität: 19.05.1998 DE 19822540
(43) Veröffentlichungstag der Anmeldung: 10.05.2000
(73) Patentinhaber: Voith Turbo GmbH & Co. KG, 89522 Heidenheim (DE)
(72) Erfinder: HANKE, Wolfgang, D-89518 Heidenheim (DE); BROCKMANN, Rolf, D-89522 Heidenheim (DE)
(74) Vertreter: Dr. Weitzel & Partner
(86) Internationale Anmeldenummer: EP9903324
(87) Internationale Veröffentlichungsnummer: WO99060286

(56) Entgegenhaltungen:
- EP-A- 0 423 089
- DE-A- 3 931 428
- DE-C- 3 916 575
- US-A- 5 307 710

## Beschreibung

Die Erfindung betrifft eine Vorrichtung zum Dämpfen von Schwingungen eines rotierenden Bauelementes, insbesondere einen Schwingungstilger, im einzelnen mit den Merkmalen aus dem Oberbegriff des Anspruchs 1, siehe DE-C-2 848 748.

Der Ausdruck "Vorrichtung zum Dämpfen von Schwingungen" ist im weitesten Sinne zu verstehen. Es kann sich hierbei um sogenannte Schwingungstilger, Schwingungsdämpfungseinrichtungen oder kombinierte Einrichtungen zwischen Schwingungstilger und Schwingungsdämpfer handeln. Unter einem Schwingungstilger wird dabei eine Vorrichtung verstanden, welche dem Abbau von im Antriebsstrang auftretenden Schwingungen, insbesondere an rotierenden Bauelementen, und nicht der Dämpfung von Schwingungen bei der Drehmomentenübertragung zwischen zwei Bauelementen im Antriebsstrang dient. Ein Tilger ist somit nicht primär an der Drehmomentenübertragung während des gesamten Betriebes von einer Anauf eine Abtriebsseite beteiligt. Bei einer Schwingungsdämpfungseinrichtung handelt es sich in der Regel um eine elastische Kupplung, die zwischen zwei Bauteilen angeordnet wird, beispielsweise einer Verbrennungskraftmaschine und einem Getriebe. Derartige Kupplungen dienen dazu, Torsionsschwingungen vom Rotor nicht auf den übrigen Antriebsstrang zu übertragen. Eine derartige elastische Kupplung ist in der DE-PS 28 48 748 offenbart. Eine kombinierte Schwingungstilger-Dämpfereinrichtung ist ebenfalls bekannt. Die dort zwischen den beiden Elementen - Primärmasse und Sekundärmasse - vorgesehenen Federeinrichtungen dienen während der Anfahrphase und den Beschleunigungsphasen der Mitnahme der Sekundärmasse. Ansonsten erfolgt im wesentlichen keine Drehmomentenübertragung.

Vorrichtungen zum Dämpfen von Schwingungen sind derart gestaltet, daß die kritische Drehzahl des gesamten Massensystemes genügend weit unterhalb des Betriebsbereiches liegt. Dabei sollen beim Durchfahren der kritischen Drehzahl keine großen Amplituden und keine großen Torsionsmomente in den einzelnen Elementen entstehen.

Wesentliche Elemente eines Schwingungsdämpfers bzw. eines Tilgers sind eine Dämpfungseinrichtung sowie eine Federeinrichtung. Die Dämpfungseinrichtung umfaßt Kammern, die über Kanäle definierter Weite miteinander in leitender Verbindung stehen. Dabei wird während des Betriebes ein Dämpfungsmittel aus der einen Kammer durch den Kanal in die benachbarte Kammer verdrängt. Die Federeinrichtung umfaßt eine Mehrzahl von Federn, die auf einem zur Dämpfer- bzw. Tilgerachse koaxialen Kreis angeordnet sind.

In der Praxis hat sich gezeigt, daß Torsionsschwingungen nicht derart stark gedämpft werden, wie dies erwünscht ist. Es treten Resonanzschwingungen auf. Diese können sehr nachteilig sein. Sie können beispielsweise in der Druckindustrie zu sogenannten Passer-Ungenauigkeiten führen.

Der Erfindung liegt die Aufgabe zugrunde, eine Vorrichtung zum Dämpfen von Schwingungen, insbesondere einen Schwingungstilger, anzugeben, bei dem jegliche Schwingungen in perfekter Weise derart gedämpft oder getilgt werden, daß keinerlei unerwünschte Resonanzen auftreten, die das Arbeitsergebnis beeinträchtigen.

Diese Aufgabe wird durch die Merkmale des unabhängigen Anspruchs gelöst.

Eine wesentliche Erkenntnis besteht darin, daß das Kraft-Weg-Diagramm oder die Federkennlinie bei bekannten Vorrichtungen zur Schwingungsdämpfung, insbesondere Schwingungstilgern keinen absolut linearen Verlauf hat, sondern zumindest eine Sprungstelle oder einen Freigang aufweist. Dies bedeutet, daß bei der Zuordnung von Belastung und Verformung der Feder beim Belastungswechsel im ersten Fall eine größere Kraft keine Verformung bewirkt, während im zweiten Fall ohne Krafteinwirkung eine bestimmte Ausdehnung der Feder oder ein Zusammenziehen möglich wäre. Die Erfinder haben zum einen erkannt, daß diese Sprungstelle oder der Freigang verantwortlich für unerwünschte Resonanzen sind. Zum anderen haben sie daraus die Schlußfolgerung gezogen, daß der Bereich der Sprungstelle oder des Freiganges im Betrieb vermieden werden muß, und daß demgemäß entweder nur im sogenannten Kompressionsbereich oder nur im sogenannten Expansionsbereich, wobei der Kompressionsbereich sich im wesentlichen durch Schubbeanspruchung und Verringerung der Federlänge und der Eₓpansionsbereich durch Zugbelastung und Vergrößerung der Federlänge charakterisieren läßt, gearbeitet werden muß. Dies bedeutet anders ausgedrückt, daß die Federeinrichtungen entsprechend vorzuspannen ist, um eine Verkürzung oder Verlängerung der Federlänge zur Kompensation der Relativbewegungen der einzelnen Massen in Umfangsrichtung zueinander zu erzielen, so daß der Übergangsbereich zwischen Schub und Zug unter Aufhebung einer Vorspannung überhaupt nicht berührt wird. Dabei ist es aus konstruktiven Gründen zu bevorzugen, Federelemente in Form von Druckfedern vorzuspannen.

Erfindungsgemäß ist vorgesehen, eine Vorrichtung zur Schwingungsdämpfung mit einer mit dem rotierenden Bauelement wenigstens mittelbar drehfest koppelbaren Primärmasse und einer Sekundärmasse, wobei Primärmasse und Sekundärmasse über eine Dämpfungs- und Federkopplung miteinander koppelbar sind, und Mittel zur Realisierung der Federkopplung in Form von Federeinrichtungen vorgesehen sind, derart zu gestalten, daß die Federeinrichtungen wenigstens zwei Federelemente umfassen, welche, in Umfangsrichtung der Vorrichtung betrachtet hintereinander zwischen Primärmasse und Sekundärmasse vorgespannt angeordnet sind und beide Federelemente einer Federeinrichtung sich gegeneinander durch Abstützung der Primärmasse gegenüber der Sekundärmasse abstützen. Damit wird aus den Kennlinien beider Federelemente eine Kennlinie für die Gesamtfedereinrichtung entwickelt, welche frei von Sprungstellen bzw. Freigängen ist.

Die Vorspannung ist dabei derart zu wählen, daß bei Volleinfederung des ersten Federelementes, d.h. Verringerung der Federlänge unter Schubbelastung, das andere zweite Federelement der Federeinrichtung, welches eine Entlastung erfährt, immer noch eine Vorspannung bestimmter Größe besitzt. Im anderen Fall - Volleinfederung bei Verlängerung der Federlänge in Umfangsrichtung unter Zugbelastung - ist das andere zweite Federelement, welches auf Druck beansprucht wird, immer noch vorgespannt. Dadurch wird erreicht, daß bei wechselnder Belastung, welche durch eine Änderung der Verdrehrichtung von Sekundärmasse gegenüber Primärmasse charakterisiert ist, lediglich ein Federelement der Federeinrichtung weiter vorgespannt wird, während das andere zweite Federelement entlastet und die Vorspannung zum Teil aufgehoben wird, wobei eine Erhöhung der Vorspannung für beide Federelemente einer Federeinrichtung nur durch die gleiche Belastungsart zu erzielen ist. Eine Kompensation der auftretenden Relativbewegungen zwischen beiden Massen an lediglich einem Federelement durch Änderung der Beanspruchung eines Federelementes wird somit vermieden.

Primärmasse und/oder Sekundärmasse sind vorzugsweise als scheibenförmige Elemente ausgeführt, wobei Primärmasse und/oder Sekundärmasse entweder ein scheibenförmiges Element oder zwei scheibenförmige Elemente umfassen. Im letztgenannten Fall kann beispielsweise das als Sekundärmasse fungierende Element der Vorrichtung zur Schwingungsdämpfung zwei scheibenförmige Elemente umfassen, wobei das scheibenförmige Element der Primärmasse zwischen diesen beiden angeordnet ist. Der umgekehrte Fall ist ebenfalls denkbar.

Der Begriff "scheibenförmige Elemente" ist dabei als Baueinheit zu verstehen. Jedes scheibenförmige Element als Baueinheit kann wiederum selbst aus einer Vielzahl von scheibenförmigen Bauteilen zusammengesetzt sein.
In der Regel wird der Begriff Primärmasse bei Schwingungstilgern für die mit dem rotierenden Bauelement wenigstens mittelbar drehfest koppelbaren Massenteile und der Begriff Sekundärmasse in diesem Fall für das freischwingende Massenteil verwendet. Bei Schwingungsdämpfungseinrichtungen wird unter der Bezeichnung "Primärmasse" in der Regel das mit der Antriebseite drehfest gekoppelte Massenteil verstanden, während als Sekundärmasse das mit der Abtriebseite drehfest verbindbare Massenteil bezeichnet wird.

In der konstruktiven Ausführung zur Realisierung der Anordnung der Federeinrichtungen umfaßt die Primärmasse in Umfangsrichtung verlaufende erste Ausnehmungen. Die Sekundärmasse umfaßt in Einbaulage zu den ersten Ausnehmungen an der Primärmasse hinsichtlich deren Abstand und Größe im wesentlichen komplementäre zweite Ausnehmungen, wobei die Einbaulage im Nicht-Funktionszustand (kein Auftreten von Schwingungen), die sogenannte Mittenlage oder Nullverdrehung zwischen Primärmasse und Sekundärmasse dadurch gekennzeichnet ist, daß die Ausnehmungen an der Primärmasse und der Sekundärmasse einander derart überlappen, daß die die Federelemente in Umfangsrichtung abstützenden Wandbereiche der Sekundärmasse etwa mittig der Ausnehmung der Primärmasse zugeordnet sind. Mit anderen Worten kann die Sekundärmasse bei identischer Ausgestaltung der Ausnehmungen hinsichtlich ihrer Ausnehmung in Umfangsrichtung um die halbe Erstreckung der Ausnehmung der Primärmasse in Umfangsrichtung versetzt angeordnet sein. Durch diese Anordnung in der sogenannten Mittenlage, d.h. in Einbaulage ohne Funktionsausübung, wird der theoretisch durch die Ausnehmungen an der Primärmasse gebildete Bereich in zwei in Umfangsrichtung im wesentlichen gleich große Aufnahmebereiche für die Federelemente unterteilt. Diese beiden Federelemente bilden gemeinsam die erfindungsgemäße Federeinrichtung. Die Federelemente stützen sich dabei in Umfangsrichtung an den Außenwänden der Ausnehmung der Primärmasse und jeweils den durch die Sekundärmasse gebildeten Wandbereichen ab. Jedem der Federelemente ist an den Federenden jeweils ein Führungskörper zugeordnet, an welchen die beiden Massen - Primärmasse und Sekundärmasse - im Bereich der Aufnahmebereiche tangential angreifen. Die Federelemente selbst werden vorgespannt eingebaut, wobei die Vorspannung derart gewählt wird, daß bei Volleinfederung eines Federelementes einer Federeinrichtung das andere Federelement immer noch eine Vorspannung bestimmter Größe aufweist.

Als Federelemente können Zug- oder Druckfedern Verwendung finden. Vorzugsweise werden jedoch Druckfedern eingesetzt, wodurch eine bauraumsparende Ausführung der Vorrichtung erzielt werden kann.

Die einzelnen Führungselemente bzw. Führungskörper, welche auch als Federtopf bezeichnet werden, können unterschiedlich ausgestaltet sein. Vorzugsweise werden jedoch für eine Vorrichtung gleich ausgelegte und ausgeführte Elemente verwendet.

Des weiteren sind vorzugsweise zwischen der Primär- und der Sekundärmasse Mittel zur Dämpfung von Längs- und/oder Drehschwingungen vorgesehen, welche einer Relativbewegung der Primärmasse gegenüber der Sekundärmasse entgegenwirken und die durch die Relativbewegung der Primärmasse gegenüber der Sekundärmasse von den Schubkräften geleistete Arbeit beispielsweise in Wärme umwandeln. Vorzugsweise erfolgt die Dämpfung hydraulisch. Zu diesem Zweck umfassen die Mittel zur Dämpfung zwischen der Primär- und der Sekundärmasse ein Hydraulikfluid, d.h. eine inkompressible Flüssigkeit. Der Einsatz anderer Medien, beispielsweise eines elastischen Materials, ist ebenfalls denkbar. Das Dämpfungsmedium kann dabei in separaten, im wesentlichen abgeschlossenen Kammern, die zwischen Primärmasse und Sekundärmasse bei Vorsehung entsprechender zueinander komplementäre Ausnehmungen vorgesehen werden, oder im Bereich der Federeinrichtungen angeordnet sein. Denkbar ist beispielsweise, das Dämpfungsmedium im Bereich einer Einrichtung zur Realisierung einer Verdrehwinkelbegrenzung vorzusehen. Auch eine vollständige Befüllung bzw. Ausfüllung des Zwischenraumes zwischen Primär- und Sekundärmasse ist möglich. Die Versorgung mit Hydraulikfluid als Dämpfungsmedium kann einmalig von außen, während des Betriebes oder durch Austausch über ein Hydraulikflüssigkeitsversorgungssystem erfolgen. Des weiteren kann die Versorgung einmalig mittels einer separaten Betriebsmittelversorgungseinrichtung, d.h. durch eine eigene Dämpfungsfüllung oder aber direkt vom zu dämpfenden Aggregat über eine entsprechende Versorgungsleitung realisiert werden. Denkbar ist in diesem Zusammenhang auch die Ausbildung eines Kreislaufes, welcher es ermöglicht, die Hydraulikflüssigkeit immer auf einer konstanten Temperatur zu halten.

In der konstruktiven Ausführung ist die Primärmasse, welche vorzugsweise als scheibenförmiges Element ausgeführt ist, wenigstens mittelbar drehfest mit dem rotierenden Bauelement im Antriebsstrang koppelbar, an welchem die Längs- und/oder Drehschwingungen auftreten, die zu kompensieren sind. Der Primärmasse ist die Sekundärmasse zugeordnet, welche entweder ohne Kopplung der Primärmasse zugeordnet wird, oder aber mit dem abtriebseitigen Teil verbunden ist. Die Übertragung der auftretenden Längsund/oder Drehschwingungen bzw. die Abstützung dieser an der Sekundärmasse erfolgt mittels der Federeinrichtung. Die einzelnen Federeinrichtungen sind dabei vorzugsweise auf einem bestimmten definierten Durchmesser in Umfangsrichtung in entsprechenden Ausnehmungen an der Primärmasse angeordnet und stützen sich immer an der Sekundärmasse ab. Der Abstand in Umfangsrichtung ist vorzugsweise konstant. Bezüglich der konkreten konstruktiven Ausführung der Federabstützung kann auf die dazu getroffenen Ausführungen entsprechend der Druckschriften DE-OS 36 35 043 und DE 39 16 575 verwiesen werden. Der Offenbarungsgehalt dieser Druckschriften bezüglich der Möglichkeiten der Abstützung einer Feder zwischen zwei Elementen wird hiermit vollumfänglich in den Offenbarungsgehalt der Anmeldung miteinbezogen.

Über die Federeinrichtungen werden die Schwingungen bei Relativbewegungen der Primärmasse gegenüber der Sekundärmasse von letzterer kompensiert. Bei Anwendung im Schwingungstilger erfolgt im Optimalfall, d.h. bei Nichtauftreten von Längs- und/oder Drehschwingungen an dem Antriebsaggregat, an welchem die Vorrichtung zur Schwingungsdämpfung angeordnet ist, eine Rotation von Primär- und Sekundärmasse mit der gleichen Geschwindigkeit. Dies bedeutet, daß keine Relativbewegung zwischen beiden stattfindet. Die zwischen beiden Elementen - Primärmasse und Sekundärmasse - vorgesehenen Federeinrichtungen dienen dann lediglich während der Anfahrphase und den Beschleunigungsphasen der Mitnahme der Sekundärmassen, ansonsten erfolgt keinerlei Drehmomentenübertragung über diese. Im Falle des Auftretens von Längs- und/oder Drehschwingungen am rotierenden Bauelement werden diese in die Primärmasse eingeleitet. Über die Federeinrichtungen erfolgt eine Übertragung auf die Sekundärmasse infolge der Relativbewegungen zwischen der Primär- und der Sekundärmasse. Die Sekundärmasse ist dabei hinsichtlich ihrer Trägheit derart auszulegen, daß diese ein bestimmtes Maß an Schwingungen ohne Probleme abstützt: Die Auslegung erfolgt durch entsprechende Festlegung des Trägheitsmomentes I.

Die Abschwächung auftretender Relativbewegung erfolgt über entsprechende Mittel, vorzugsweise hydraulisch, In diesem Fall sind beispielsweise im Bereich der Druckfedern oder eines Anschlages zur Begrenzung des Verdrehwinkels Kammern vorgesehen, welche mit einer Hydraulikflüssigkeit befüllbar sind. Diese Flüssigkeit wird bei auftretender Relativbewegung zwischen Primärmasse und Sekundärmasse verdrängt, stellt dabei jedoch einen Widerstand dar.

Das gleiche Prinzip ist auch bei Schwingungsdämpfungseinrichtungen, d.h. bei Einrichtungen zur Drehmomentenübertragung mit integrierter Dämpfung einsetzbar. Auch diese umfassen in der Regel eine Primärmasse und eine Sekundärmasse, welche in entsprechender Weise über Federeinrichtungen miteinander koppelbar sind.

Zur Ausschaltung weiterer Resonanzquellen sind vorzugsweise folgende Maßnahmen denkbar:
- Verminderung der Reibdämpfung durch entsprechende Gestaltung und Auslegung der Federtöpfe bzw. der axialen Führung der Federtöpfe;
- gezielte Einstellbarkeit der Scherdämpfung durch Auslegung der axialen und/oder radialen Lagerung der einzelnen Elemente - Primärmasse und/oder Sekundärmasse.

Zur Verminderung der Reibdämpfung bei Relativbewegung der Sekundärmasse gegenüber der Primärmasse wird der Federtopf an der Sekundärmasse derart axial geführt, daß dieser bei Relativbewegung gegenüber der Primärmasse keine zusätzliche Relativbewegung zur Sekundärmasse erfährt. Die axiale Führung kann dabei beispielsweise über entsprechend gestaltete Blechplatten oder Rücksprünge an der Sekundärmasse erfolgen. Im einfachsten Fall kann dieser Effekt jedoch auch durch Verwendung zweier verschieden breiter Führungselemente für ein Federelement erfolgen, wobei das der Relativbewegung ausgesetzte Federelement in axialer Richtung schmaler ausgeführt wird.

Die Erfindung ist anhand der Zeichnung näher erläutert. Darin ist im einzelnen folgendes dargestellt:
- Figur 1: zeigt ein Ausführungsbeispiel einer erfindungsgemäßen Vorrichtung zur Schwingungsdämpfung eines rotierenden Bauteiles im Axialschnitt in Form eines Schwingungstilgers in Dreischeibenausführung;
- Figur 2: zeigt eine Ansicht l-l entsprechend Figur 1;
- Fig. 3a-3c: verdeutlichen die Wirkungsweise der Federelemente einer Federeinrichtung in einzelnen Funktionszuständen;
- Figur 4: verdeutlicht die mit der erfindungsgemäßen Anordnung der vorgespannten Federelemente erzielbare Gesamt-Federkennliniencharakteristik der Federeinrichtung, umfassend mindestens zwei Federelemente;
- Fig. 5a, 5b: verdeutlichten Federkennlinienausführungen entsprechend dem Stande der Technik;
- Figur 6: verdeutlicht einen Ausschnitt aus Fig. 1;
- Figur 7a-7b: verdeutlichen jeweils eine Ansicht entsprechend der Figuren 1 und 2 auf einen Schwingungstilger in Zweischeibenausführung;
- Figur 8: zeigt einen Anwendungsfall der erfindungsgemäßen Lösung für einen Torsionsschwingungsdämpfer;
- Figur 9: verdeutlicht einen Anwendungsfall der erfindungsgemäßen Lösung für ein Zweimassenschwungrad.

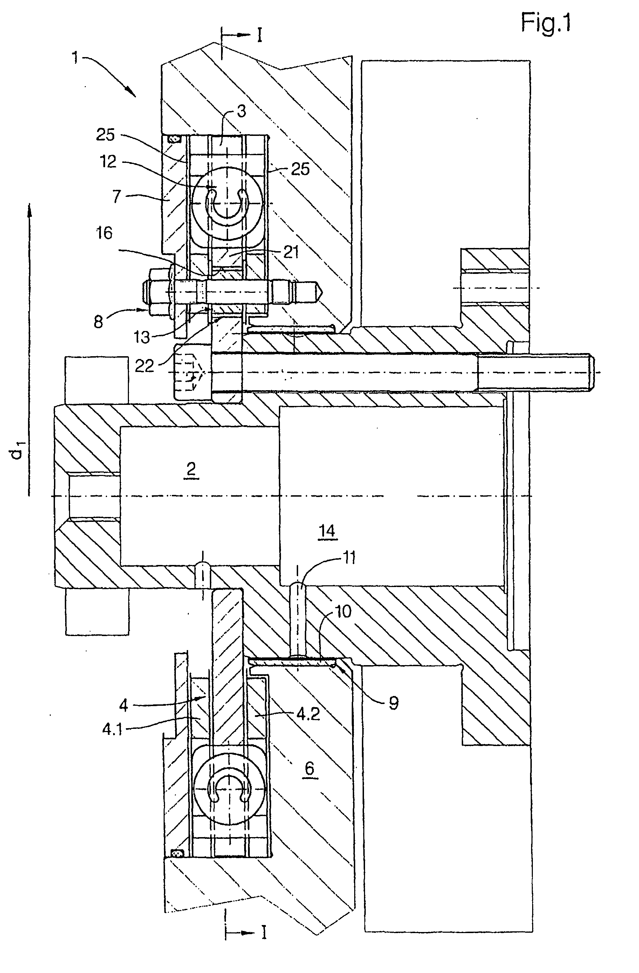

Die Figur 1 verdeutlicht im Axialschnitt eine Ausführung einer Vorrichtung zur Schwingungsdämpfung 1 eines rotierenden Bauelementes, insbesondere einen Schwingungstilger, welcher zur Dämpfung von Längs- und/oder Drehschwingungen an einem rotierenden Bauelement, bspw. einer Welle 2 in Dreischeibenbauweise, wobei die einzelnen scheibenförmigen Elemente als Baueinheit aus mehreren Elementen zusammengesetzt sein können, eingesetzt wird. Der Tilger 1 umfaßt dazu zwei Massen, eine erste sogenannte Primärmasse 3 und eine zweite sogenannte Sekundärmasse 4. Die Sekundärmasse 4 wird auch als Trägheitsmasse oder Schwungring bezeichnet. Die Primärmasse 1 ist drehfest mit dem rotierenden Bauelement dessen Schwingungen gedämpft werden sollen, d.h der Welle 2, koppelbar. Im dargestellten Fall ist die Primärmasse 3 drehfest mit der Welle 2 verbunden. Die Primärmasse 3 ist im einfachsten Fall als scheibenförmiges Element ausgeführt, welches in Umfangsrichtung auf einem bestimmten Durchmesser d₁ Ausnehmungen 5, vorzugsweise in Form von Durchgangsöffnungen, aufweist. Die Sekundärmasse 4 umfaßt im einfachsten Fall zwei scheibenförmige Elemente 4.1 und 4.2, die mit einem ersten Teil in Form eines Schwungringes 6 gekoppelt sind. Im dargestellten Ausführungsbeispiel ist zusätzlich ein, mit dem Schwungring 6 drehfest gekoppelter zweiter Teil 7 vorgesehen. Beide sind ebenfalls Bestandteile der Sekundärmasse 4. Die Verbindung zwischen dem ersten Teil 6 und dem zweiten Teil 7 erfolgt dabei über Verbindungselemente 8, welche vorzugsweise in Form von Schraubverbindungen ausgeführt sind. Die radiale Führung der Sekundärmasse 4 erfolgt über eine Lageranordnung 9. Die Lageranordnung 9 umfaßt dazu eine Lagerbuchse 10, welche zwischen der Welle 2 und der Sekundärmasse 4 in radialer Richtung angeordnet ist. Die Lagerung ist dabei als Gleitlagerung ausgeführt und wird über einen Schmiermittelanschluß 11 mit Schmiermittel versorgt. Im dargestellten Fall erfolgt die Schmiermittelzufuhr über die Welle 2.

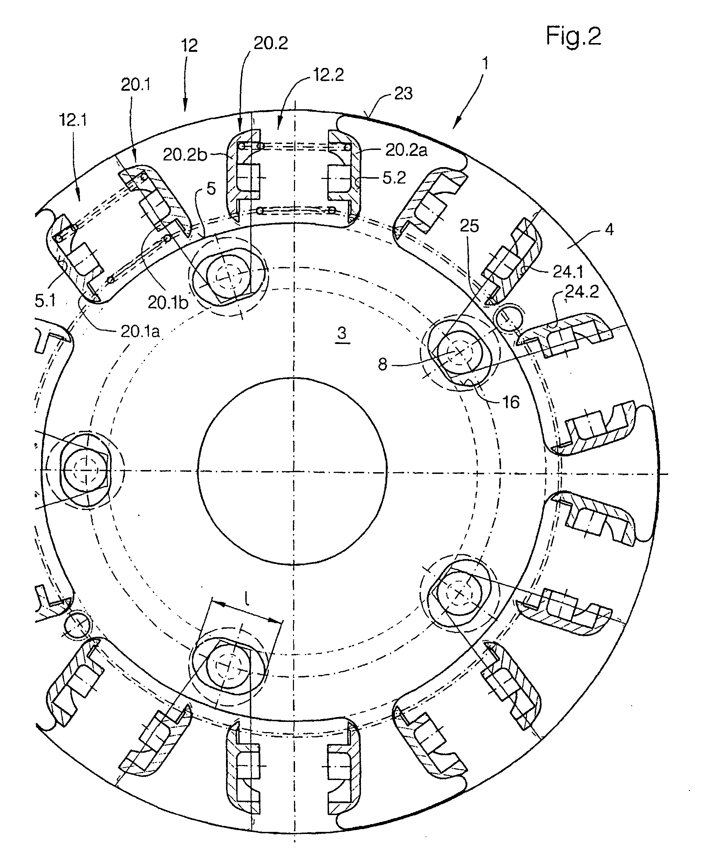

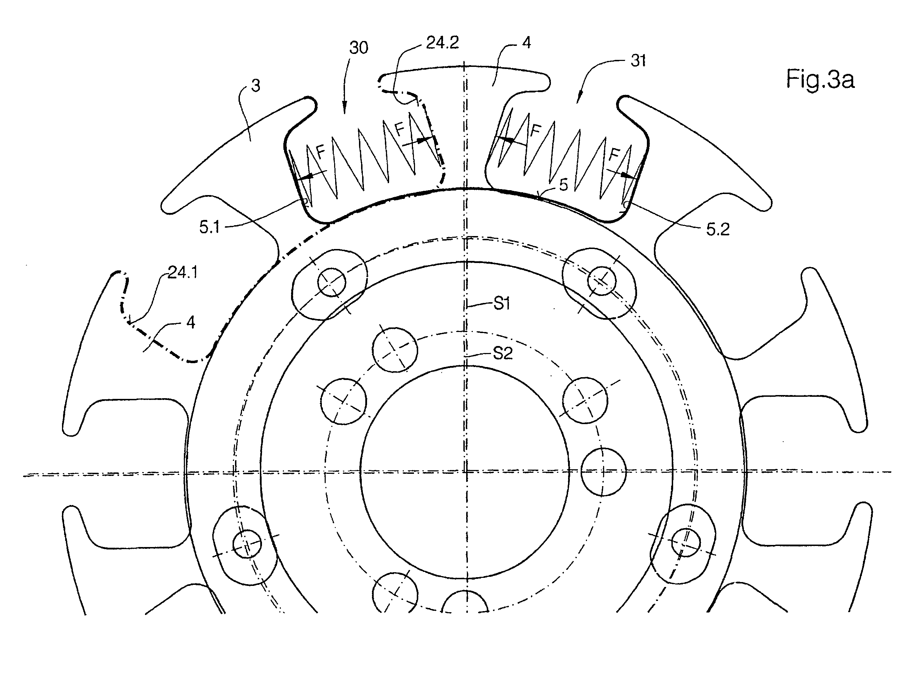

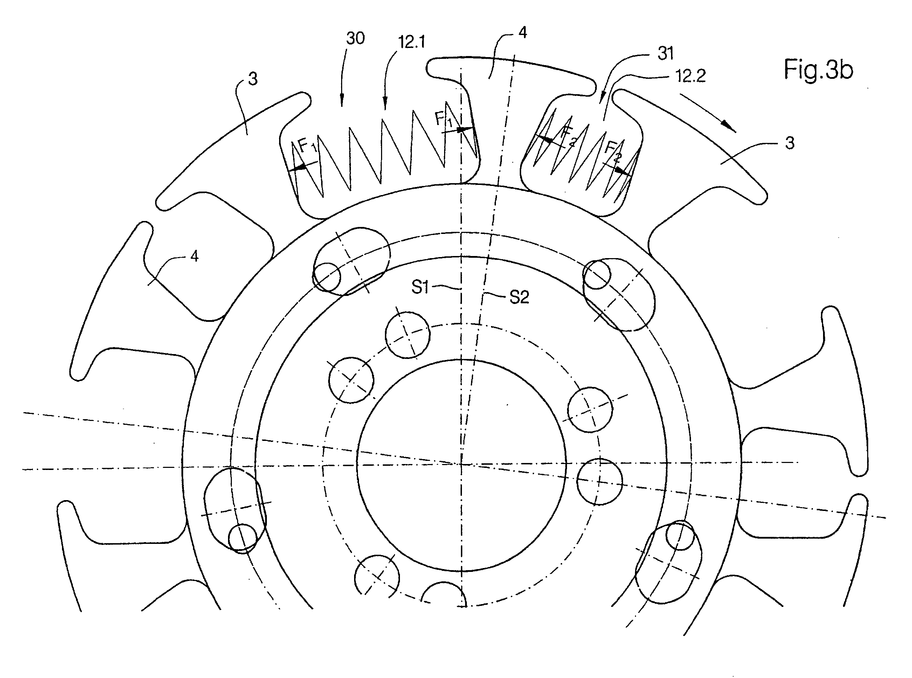

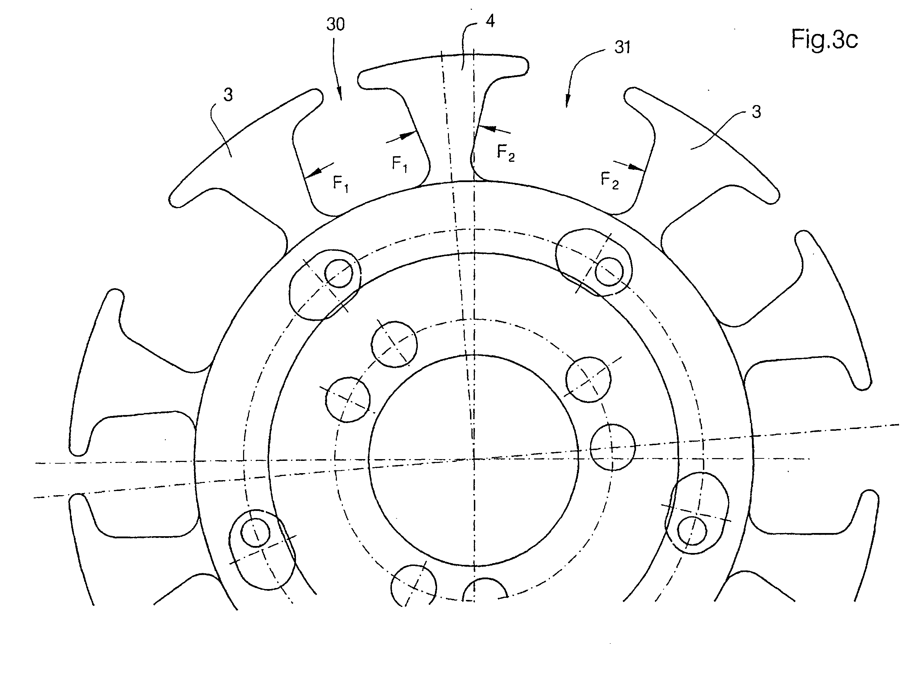

Die Sekundärmasse 4 ist lose gegenüber der Primärmasse 3 angeordnet bzw. gelagert. Eine Kopplung zwischen den beiden Massen wird zur Realisierung der Federkopplung über wenigstens eine Federeinrichtung 12 realisiert, welche wenigstens zwei vorgespannte und sich gegeneinander abstützende Federelemente 12.1, 12.2 umfaßt. Die Federelemente der Federeinrichtung 12 sind zu diesem Zweck in Ausnehmungen 5 in der Primärmasse angeordnet und erstrecken sich in Umfangsrichtung der Primärmasse 3 und stützen sich an der Sekundärmasse 4 ab. Die Anordnung, Auslegung und Funktion der beiden sich gegeneinander abstützenden vorgespannten Federelemente 12.1, 12.2 wird in den Figuren 2 und 3 näher erläutert. Die Funktion der Federeinrichtung 12 besteht darin, während der Anlauf- und/oder Beschleunigungsphasen Drehmoment auf die Sekundärmasse zu übertragen um diese in Rotation zu versetzen, Im Betrieb, d.h. bei Rotation der Welle 2 im Optimalfall, in welchem keinerlei Schwingungen auftreten, rotieren beide - Primärmasse 3 und Sekundärmasse 4 - mit der gleichen Geschwindigkeit. In diesem Fall erfolgt keine Übertragung von Drehmoment auf die Sekundärmasse oder nur im geringem Maße. Letzteres wird lediglich mitgenommen.

Bezüglich der Realisierung der Abstützung der Federeinrichtungen an Federtöpfen 20 zwischen Primär- und Sekundärmasse 3 bzw. 4 kann auf die Ausführungen entsprechend der DE 36 35 043 und DE 39 16 575 verwiesen werden.

So ist es beispielsweise denkbar, daß im vorliegenden Fall beide Teile 6 und 7 der Sekundärmasse auf einem bestimmten Durchmesser d₂ in Umfangsrichtung verlaufende fensterförmige Ausschnitte aufweisen, welche hinsichtlich des Abstandes untereinander und ihrer Größe im wesentlichen komplementär zu den die Federeinrichtungen 12 aufnehmenden Aussparungen an der Primärmasse ausgebildet und zu dieser in Umfangsrichtung in Einbaulage im unbelasteten Zustand um ca. eine halbe Erstreckung der Ausnehmung in Umfangsrichtung versetzt angeordnet sind. Beide Teile greifen beidseitig tangential an die Federeinrichtungen oder, wie in Figur 2 dargestellt, an die deren Enden zugeordneten Führungsstücke in Form von federführenden Töpfen 20. Des weiteren trifft dies auch für die Aussparung 5 an der Primärmasse zu.

Im Fall des Auftretens von Längs- und/oder Drehschwingungen an der Welle 2 werden diese über die drehfeste Kopplung der Primärmasse 3 mit der Welle 2 in die Primärmasse 3 eingeleitet. Unter Wirkung eines Torsionsmomentes im Betrieb des rotierenden Bauelementes kommt es dann zum Zusammendrücken der Federeinrichtungen 12 und damit zur Relativbewegung zwischen der Primär- und der Sekundärmasse, was zur Einstellung eines gewissen Verdrehwinkels alpha führt, wobei die Schwingungen von der Sekundärmasse 4 kompensiert werden.

Zur Dämpfung der Relativbewegung zwischen der Primärmasse 3 und der Sekundärmasse 4 sind entsprechende Mittel vorgesehen. Im dargestellten Fall erfolgt die Dämpfung über eine Hydraulikflüssigkeit. Diese wird in einen Zwischenraum zwischen der Primärmasse 3 und der Sekundärmasse 4, welcher hier mit 13 bezeichnet wird, eingefüllt. Die Befüllung des Zwischenraumes kann dabei derart erfolgen, daß entweder lediglich der Bereich, in welchem sich die Federeinrichtungen 12 befinden oder zusätzliche, hier im einzelnen nicht dargestellte Kammern, welche zwischen Primär- und Sekundärmasse gebildet werden können, ausgefüllt wird oder aber der gesamte Zwischenraum zwischen der Primärmasse 3 und der Sekundärmasse 4. Im dargestellten Fall besteht die Möglichkeit, die Dämpfungskammer 22 zwischen der, das Verbindungselement 8 umschließenden Buchse 21 und dem Langloch 16 in der Primärmasse 3 zu bilden. Für die Befüllung mit Hydraulikflüssigkeit ergeben sich eine Vielzahl unterschiedlicher Möglichkeiten. Im dargestellten Fall erfolgt die Versorgung mit Hydraulikflüssigkeit über eine entsprechende Hydraulikflüssigkeitszufuhreinrichtung 14 über die Welle 2. Die Befüllung des Zwischenraumes 13 kann dabei einmalig erfolgen oder aber je nach Einsatzfall über die rotierenden Aggregate. Es besteht dabei theoretisch auch die Möglichkeit die Zufuhr bzw. die Versorgung mit Hydraulikflüssigkeit im Zwischenraum derart zu gestalten, daß das im Zwischenraum vorhandene Hydraulikfluid bei Erwärmung auch ausgetauscht werden kann. Zu diesem Zweck sind entsprechende Abfuhrleitungen vorzusehen. Der dargestellte Fall verdeutlicht die Möglichkeit der Versorgung des Zwischenraumes 13 mit Hydraulikflüssigkeit über das Hydraulikflüssigkeitszufuhrsystem 14. Bestandteil dieses Hydraulikflüssigkeitszufuhrsystems ist dabei das Betriebsmittel bzw. Schmiermittelsystem der Welle 2, welches über eine Verbindungsleitung mit dem Zwischenraum 13 gekoppelt sein kann. Aus dem gleichen Betriebsmittel- bzw. Schmiermittelversorgungssystem wird auch die Lageranordnung 10 mit Schmiermittel versorgt.

Eine weitere, hier nicht dargestellte Möglichkeit besteht darin, die Kammern mit Fett zu befüllen.

Der Verdrehwinkel alpha in Umfangsrichtung der Primärmasse 3 gegenüber der Sekundärmasse 4, welcher ein Zusammendrücken der Federeinrichtung 12 bewirkt, welche vorzugsweise wenigstens zwei Druckfedern 12.1, 12.2 umfassen, kann beispielsweise zusätzlich begrenzt werden. Die Begrenzung erfolgt dann durch entsprechende Anschläge an der Primärmasse 3. Diese Anschläge werden über Langlöcher 16 in der Primärmasse 3, welche auf einem bestimmten Durchmesser in Umfangsrichtung angeordnet und in Umfangsrichtung vorzugsweise in gleichmäßigen Abständen zueinander verteilt sind, realisiert. Der Sekundärmasse 4 sind dazu Vorsprünge im Bereich des Durchmessers d₂ zugeordnet, welche in Einbaulage in die Aussparungen bzw. die Langlöcher der Primärmasse 3 hineinragen. Die Vorsprünge sind dabei derart auszuführen, daß die Langlöcher ohne Probleme in Umfangsrichtung gegenüber den Vorsprüngen verschiebbar sind. Es ist auch denkbar, die Funktion des vorsprungtragenden Elementes der Primärmasse zuzuweisen und die Aussparungen am Sekundärteil bzw. der Sekundärmasse vorzusehen.

Eine Reibung zwischen beiden, d.h den Vorsprüngen der Sekundärmasse 4 und der Primärmasse ist zu vermeiden. Die Vorsprünge können dabei Bestandteil der Sekundärmasse 4 sein, d.h. eine bauliche Einheit mit dieser bilden oder aber über zusätzliche Elemente realisiert werden. Im dargestellten Fall können die Verbindungselemente 8, welche den ersten Teil 6 der Sekundärmasse 4 mit dem zweiten Teil 7 drehfest miteinander verbinden, die Funktion dieser Vorsprünge übernehmen. Das Verbindungselement 8 erstreckt sich dabei durch das Langloch 16 der Primärmasse 3. Über diese Kopplung und Zuordnung zur Primärmasse 3, d.h. im dargestellten Fall des Umschließens der Primärmasse 3 in axialer und radialer Richtung und entsprechender Gestaltung der Lagerung der Sekundärmasse 4, und zusätzlicher Elemente wird die Sekundärmasse 4 in axialer Richtung fixiert. Das Langloch bzw. die Langlöcher 16, welche sich in Umfangsrichtung an der Primärmasse 3 erstrecken, bilden dann den Anschlag für das Verbindungselement 8, welches bei Relativbewegung der Primärmasse 3 gegenüber der Sekundärmasse 4 den möglichen Verdrehwinkel alpha begrenzt. Der Drehwinkel alpha ist dabei durch die Erstreckung l der Langlöcher 16 in Umfangsrichtung begrenzt. Die Nutzung von Verbindungselementen zur Realisierung dieser Anschlag- bzw. Begrenzungsfunktion für den Verdrehwinkel alpha ermöglicht es, ein kompaktes System mit einfachen, leicht austauschbaren Bestandteilen zu schaffen. Bei einer Ausführung der Sekundärmasse 4 mit Vorsprüngen, die mit der Sekundärmasse 4 eine bauliche Einheit bilden, wären zusätzliche Maßnahmen zur axialen Fixierung der Sekundärmasse 4 erforderlich.

Die Figur 2 verdeutlicht eine Ansicht l-l auf die Primärmasse entsprechend der Figur 1. Daraus erkennbar sind die Langlöcher 16, die Erstreckung der Langlöcher in Umfangsrichtung, die Verbindungselemente 8 und die Ausnehmungen für die Federeinrichtungen 12, wobei die Ausnehmungen für die Federeinrichtungen 12, die Primärmasse 3 und zum Teil angedeutet die Sekundärmasse 4. Die Ausnehmung an der Primärmasse 3 ist mit 5 bezeichnet. Diese erstreckt sich in Umfangsrichtung der Primärmasse 3, in dieser Figur betrachtet, über die axiale Erstreckung der beiden gegeneinander vorgespannten Federn 12.1 und 12.2 der Federeinrichtung 12. Die Ausnehmungen sind vorzugsweise im Umfangsbereich 23 der Primärmasse 3 angeordnet und als randoffene Aussparungen ausgeführt. Vorzugsweise sind eine Vielzahl von Federeinrichtungen 12 vorgesehen. Diese sind vorzugsweise in gleichmäßigen Abständen über den Umfang der Vorrichtung 1 verteilt, wobei die Auslegung der Federeinrichtungen identisch sein kann, vorzugsweise jedoch identisch sein sollte.

Die einzelnen Federn 12.1 und 12.2 einer Federeinrichtung 12, welche, in Umfangsrichtung betrachtet, hintereinander angeordnet sind, stützen sich an den voneinander wegweisenden Seiten einer jeden Feder 12.1 bzw. 12.2 im dargestellten Fall an der Primärmasse 3 ab. Die Abstützung erfolgt wenigstens mittelbar an den dafür in den Ausnehmungen 5 gebildeten Anschlagflächen 5.1 und 5.2. Die zueinander weisenden Seiten der Federn 12.1 bzw. 12.2 stützen sich wenigstens mittelbar an der Sekundärmasse 4 ab. Die Führung der Federn 12.1 bzw. 12.2 erfolgt dazu über sogenannte Federtöpfe 20. Diese sind für das Federelement 12.1 mit 20.1 und das Federelement 12.2 mit 20.2 bezeichnet. Die Federtöpfe 20.1 bzw. 20.2 umfassen zwei Teilführungselemente 20.1a und 20.1b bzw. 20.2a und 20.2b. Die einzelnen Teilführungselemente 20.1a bis 20.2b werden auch als Federteller bezeichnet. Die Teilführungselemente 20.1a und 20.2a dienen dabei der Abstützung der Federelemente 12.1 bzw. 12.2 an den Flächen 5.1 bzw. 5.2 der Primärmasse 3. Über die Teilführungselemente 20.1b und 20.2b erfolgt die Abstützung der Federelemente 12.1 bzw. 12.2 an der Sekundärmasse 4. Die erfindungsgemäß verwendeten vorgespannten Federelemente sind vorzugsweise als Druckfedern ausgeführt. Denkbar ist jedoch auch eine Ausführung mit Zugfedern. Die Abstützflächen an der Sekundärmasse 4, hier mit 24.1 und 24.2 bezeichnet, werden bei dieser Ausführung entsprechend Figur 2, bezogen auf Figur 1 von den Elementen 4.1 und 4.2 gebildet.

Des weiteren sind Elemente 25 erkennbar, welche in dieser Darstellung im wesentlichen V-förmig ausgestaltet und in der Ansicht entsprechend Figur 1 plättchenförmig ausgestaltet sind. Diese sind zwischen den beiden scheibenförmigen Elementen 4.1 und 4.2 der Sekundärmasse 4 und dem mit diesem gekoppelten Schwungring 6 angeordnet. Sie dienen dazu, den Spaltraum zwischen den einzelnen Elementen der Primärmasse in Form der Mittelscheibe 3 bei Ausführung als Dreischeibenausführung und der Sekundärmasse 4 in Form der scheibenförmigen Elemente 4.1 und 4.2 auszufüllen. Diese dienen der axialen Führung der Teilführungselemente 20.1b bzw. 20.2b, d.h. der Verhinderung einer Relativbewegung senkrecht zur dargestellten Zeichenebene in Fig. 2. Die Teilführungselemente 20.1b und 20.2b sind durch die Elemente 25 somit mehr oder minder stramm eingespannt, so daß sie keine oder nur eine geringe axiale Bewegung ausführen können, während die Teilführungselemente 20.1a und 20.2a axial frei bewegbar geführt sein können. Denkbar ist auch, beide Teilführungselemente eines Federtopfes axial entsprechend zu führen. Durch die Führung der Federtöpfe bzw. einzelner Teilführungselemente der Federtöpfe wird schädliche Reibdämpfung bzw. Scherdämpfung, welche sich bei axialer Bewegung der Federtöpfe im Betriebszustand gegenüber den Primär- und Sekundärmassen einstellt und die wiederum ungewünschte Resonanzen bzw. Schwingungen hervorruft, vermieden.

Die in der Figur 2 dargestellte Möglichkeit der axialen Führung durch V-förmige Elemente 25 stellt eine bevorzugte Ausführung dar. Denkbar ist jedoch im einfachsten Fall die Verwendung zweier unterschiedlich breiter Teilführungselemente eines Federtopfes. Andere Möglichkeiten bestehen im Einsatz von Blechplatten oder Rücksprüngen.

In den Figuren 3a bis 3c wird anhand einer schematisch vereinfachten Darstellung auf eine Vorrichtung zur Dämpfung von Schwingungen 1, insbesondere einen Schwingungstilger entsprechend den Figuren 1 und 2 anhand einer Ansicht entsprechend Figur 2 die Funktionsweise der erfindungsgemäß vorgespannten Federelemente 12,1, 12.2 der Federeinrichtungen 12 verdeutlicht.

Die Figur 3a verdeutlicht die sogenannte Mittenlage, d.h. Nullstellung, zwischen den beiden Massen - Primärmasse 3 und Sekundärmasse 4 - einer Vorrichtung zur Schwingungsdämpfung 1 eines rotierenden Bauelementes, insbesondere eines Schwingungstilgers, in stark schematisierter und vereinfachter Darstellung. Erkennbar ist die Ausnehmung 5 (stark nachgezogen), welche die beiden Anschlagflächen 5.1 und 5.2 bildet, des weiteren eine entsprechend komplementäre Ausnehmung 27 (strichpunktiert angedeutet) im Sekundärteil 4, welche die Anschlagflächen 24.1 und 24.2 bildet. Die Ausnehmung 27 an der Sekundärmasse 4 sowie die Ausnehmung 5 an der Primärmasse 3 sind vorzugsweise hinsichtlich ihrer Erstreckung in Umfangsrichtung identisch ausgeführt. In der Mittenlage, d.h. Nullstellung, sind das die Anschlagflächen 24.1 bzw. 24.2 der Sekundärmasse 4 tragende Element bzw. die Elemente derart gegenüber der Ausnehmung 5 angeordnet, daß diese in der Ansicht von Rechts betrachtet eine mittige Stellung in der Ausnehmung 5 einnehmen, d.h. mittig zu den beiden Anschlagflächen 5.1 bzw. 5.2 an der Primärmasse 3 angeordnet sind. Zwischen Primärmasse und Sekundärmasse, insbesondere Anschlagfläche 5.1 und 24.1 sowie 5.2 und 24.2 in Umfangsrichtung, werden die Aufnahmebereiche 30 und 31 für die Federelemente 12.1 und 12.2 einer Federeinrichtung 12 gebildet. Diese sind in Mittenlage in Umfangsrichtung im wesentlichen gleich groß ausgeführt und die Federelemente 12.1 und 12.2 wirken mit gleicher Vorspannung auf die Anschlagflächen 5.1, 5.2 bzw. 24.1 und 24.2. Die Mittenlage entspricht dabei der Stellung der beiden Schwungmassen - Primärmasse und Sekundärmasse - zueinander, in welcher keinerlei Relativbewegung zwischen beiden durch auftretende Schwingungen an den rotierenden Bauteilen erzeugt wird.

Die Figuren 3b und 3c verdeutlichten zwei mögliche Stellungen von Primärmasse 3 und Sekundärmasse 4 zueinander im Funktionszustand "Dämpfung bzw. Kompensation von Schwingungen " des Schwingungstilgers, d.h. bei Einfederung der Federeinrichtungen 12, dargestellt jeweils für eine Federeinrichtung 12. Bei Relativbewegung der Sekundärmasse 4 und damit der scheibenförmigen Elemente 4.1, 4.2 in Umfangsrichtung in Drehrichtung entsprechend der Figur 3b erfolgt eine Einfederung am Federelement 12.2, während das Federelement 12.1 entlastet, jedoch immer noch eine bestimmte, jedoch geringere Vorspannung aufweist. Die Relativbewegung zwischen Primärmasse 3 und Sekundärmasse 4 wird anhand der Änderung der Lage der Symmetrieachsen S1 für die Primärmasse und S2 für die Sekundärmasse gegenüber der Mittenlage in der Figur 3a, in welcher beide Symmetrieachsen S1 und S2 übereinanderliegen, bzw. den Verdrehwinkel alpha verdeutlicht. Die Relativbewegung der Sekundärmasse 4 gegenüber der Primärmasse 3 geht im dargestellten Fall mit einer Vergrößerung des Federaufnahmebereiches 30 und einer Verringerung des Federaufnahmebereiches 31 einher, wobei entsprechende Kräfte auf die Federelemente 12.1 bzw. 12.2 wirken und das Federelement 12.2 weiter vorspannen und das Federelement 12.1 entlasten.

In der Figur 3c ist zusätzlich der Zustand der Einfederung bei Wirkung eines Momentes auf die Sekundärmasse 4 und damit Retativbewegung in entgegengesetzter Richtung zur Figur 3b dargestellt. Die Funktionsweise ist die gleiche.

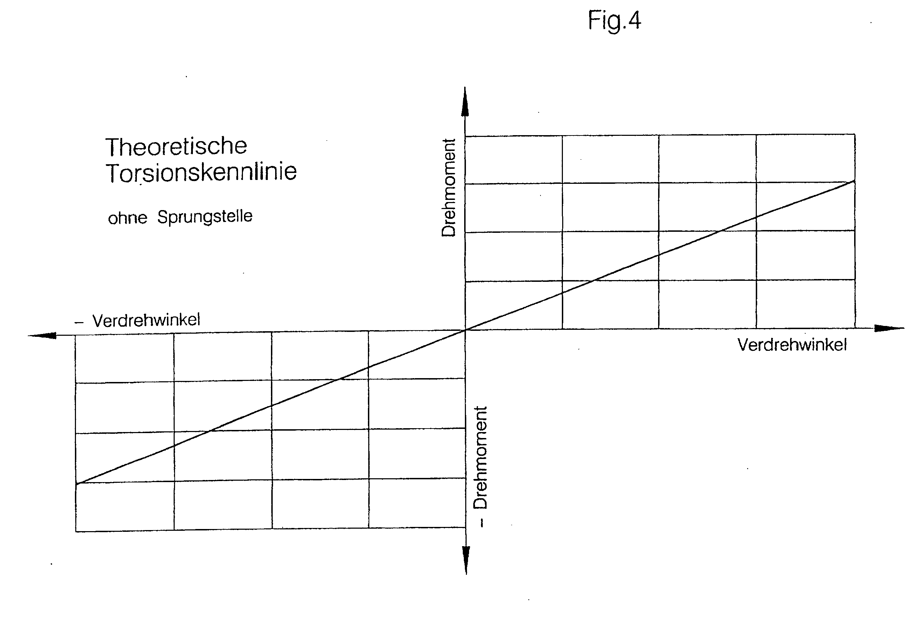

Mit dem erfindungsgemäßen Einsatz von Federeinrichtungen, umfassend zwei an Primärmasse und Sekundärmasse sich gegeneinander abstützende und vorgespannte Federelemente 12.1, 12.2, welche auch im eingefederten Zustand, d.h. bei Kraftwirkung bzw. Entlastung eine Vorspannung aufweisen, wird eine Federkennliniencharakteristik entsprechend der Figur 4 erzielt. Daraus ist ersichtlich, daß die Gesamtfedereinrichtung 12 unabhängig von der sich einstellenden Relativbewegung zwischen Primärmasse und Sekundärmasse unter Zug- oder Druckbeanspruchung eine im wesentlichen lineare Kennliniencharakteristik aufweist. Verformungen, d.h. Federweg und Kraft, sind in allen Belastungszuständen direkt proportional zueinander. Unerwünschte Resonanzen, welche durch starke Änderungen im Kennlinienverlauf hervorgerufen werden, werden vermieden.
Das Diagramm in Figur 4 verdeutlicht die Federkennlinie der Federeinrichtung 12 mit einer bestimmten Federkonstanten c in einem Diagramm aus Kraft und Verdrehwinkel zwischen Primär- und Sekundärmasse.

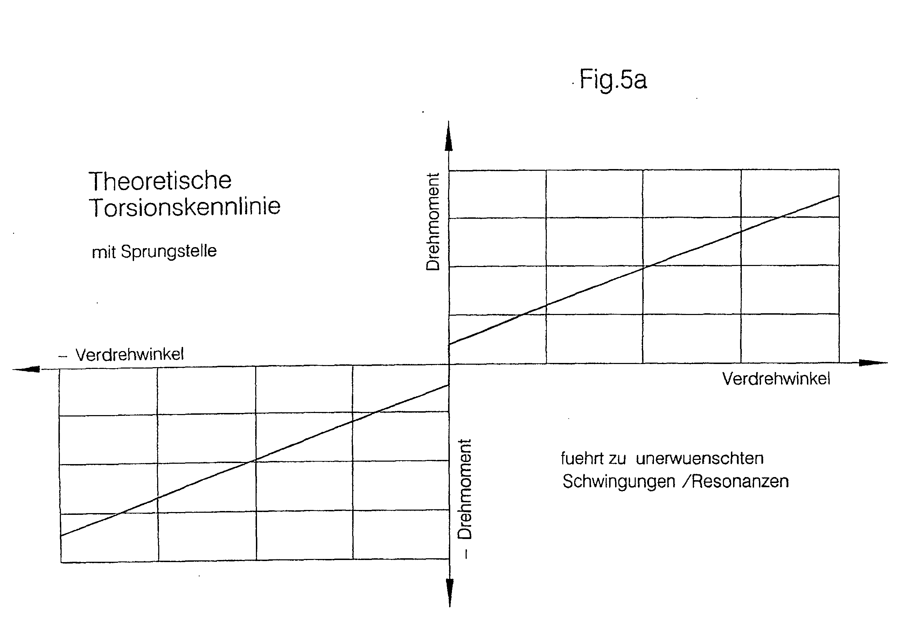

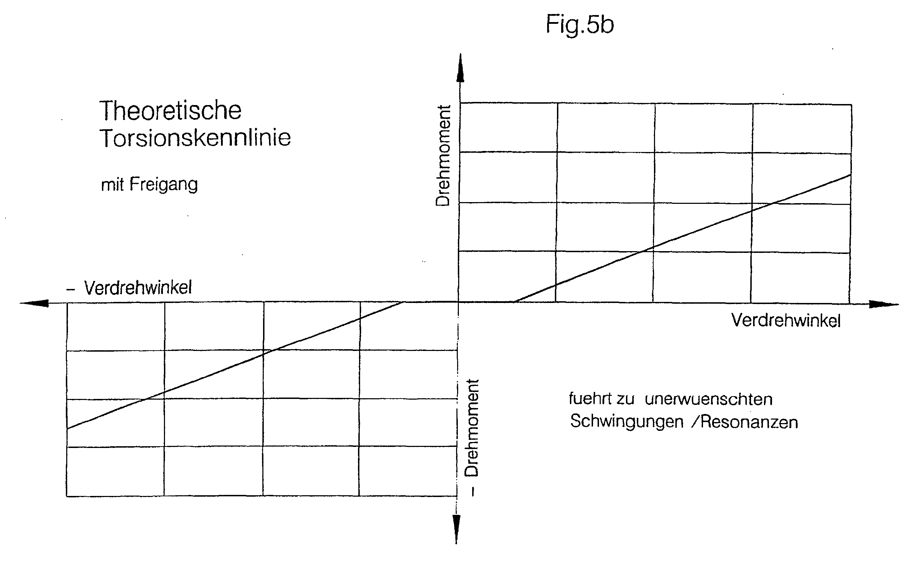

In den Figuren 5a und 5b sind zum Vergleich die Kennlinien von Federeinrichtungen, wie sie bei Ausführungen entsprechend dem Stand der Technik verwendet werden, dargestellt. Daraus wird ersichtlich, daß bei Verwendung lediglich eines Federelementes in einer Federeinrichtung diese im Betriebsbereich "Beiastungswechsel" (Änderung der Verdrehrichtung zwischen Primär- und Sekundärmasse) entweder eine Sprungstelle (Figur 5a) oder einen Freigang (Figur 5b) aufweist. Die im Bereich des Überganges zwischen den einzelnen Belastungsarten in der Federcharakteristik auftretenden Sprungstellen bzw. Freigänge bewirken beim Übergang von einem Belastungszustand zu einem anderen Belastungszustand, beispielsweise von Zugbelastung zu Druckbelastung oder umgekehrt, auf das Federelement, ein sprungartiges Ansteigen der durch die Federeinrichtungen aufgebrachten Kräfte. Diese Änderungen wiederum sind Ursache für unerwünschte Resonanzen, welche sich nachteilig auf das gewünschte Dämpfungsergebnis durch die Vorrichtung zur Dämpfung auswirken.

Die erfindungsgemäße Lösung findet bevorzugt Verwendung bei sogenannten Schwingungstilgern, d.h. Vorrichtungen zur Schwingungsdämpfung, welche derart ausgeführt sind, daß diese im Betriebsbereich einer Antriebsvorrichtung kein Drehmoment übertragen. Denkbar ist jedoch auch eine Verwendung in kombinierten Schwingungsdämpfern - Schwingungstilgereinrichtungen - oder in reinen Schwingungsdämpfern, welche Drehmoment während des Betriebes der Antriebsmaschine übertragen, beispielsweise bei Ausführungen von Schwingungsdämpfern in Form von Kupplungen.

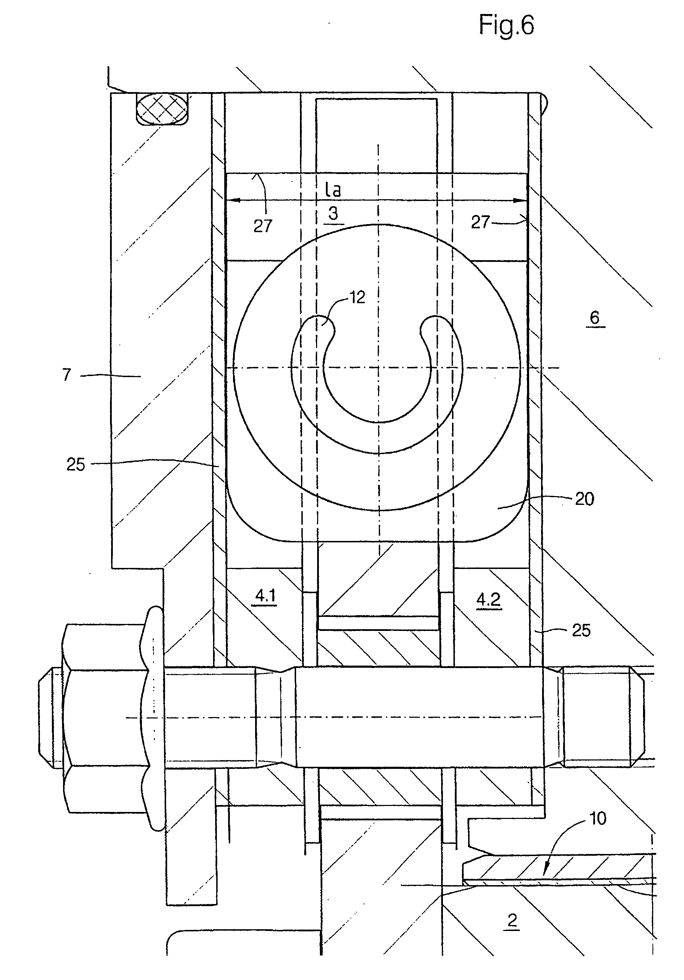

in der Fig. 6 ist noch einmal eine Ausführung eines Schwingungstilgers entsprechend Fig. 1 anhand eines vergrößerten Ausschnittes wiedergegeben. Dieser ist in Dreischeibenbauart ausgeführt. Für gleiche Elemente werden gleiche Bezugszeichen verwendet.

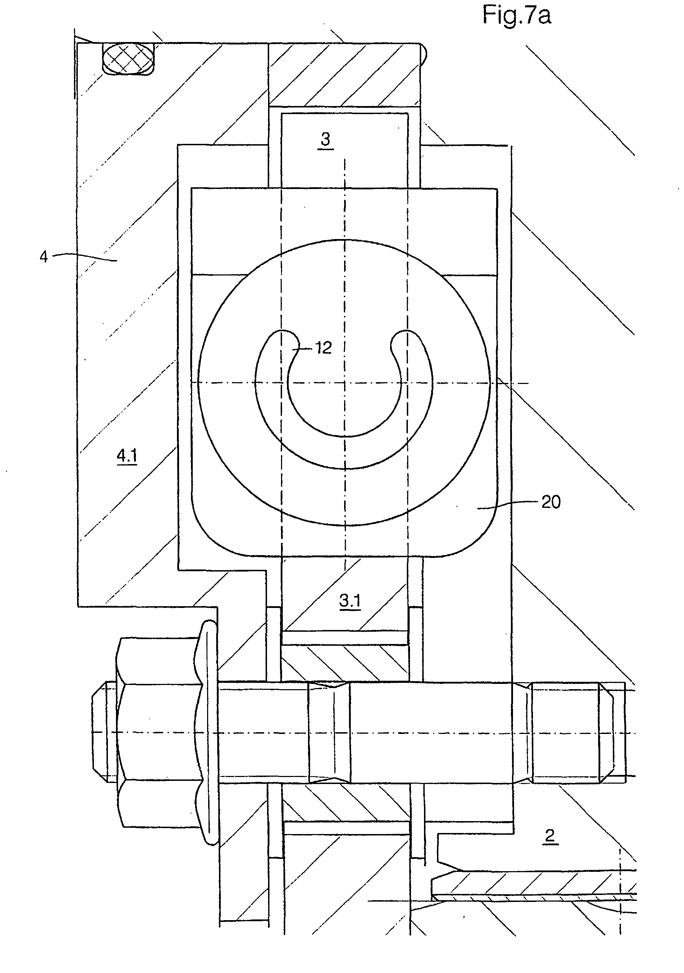

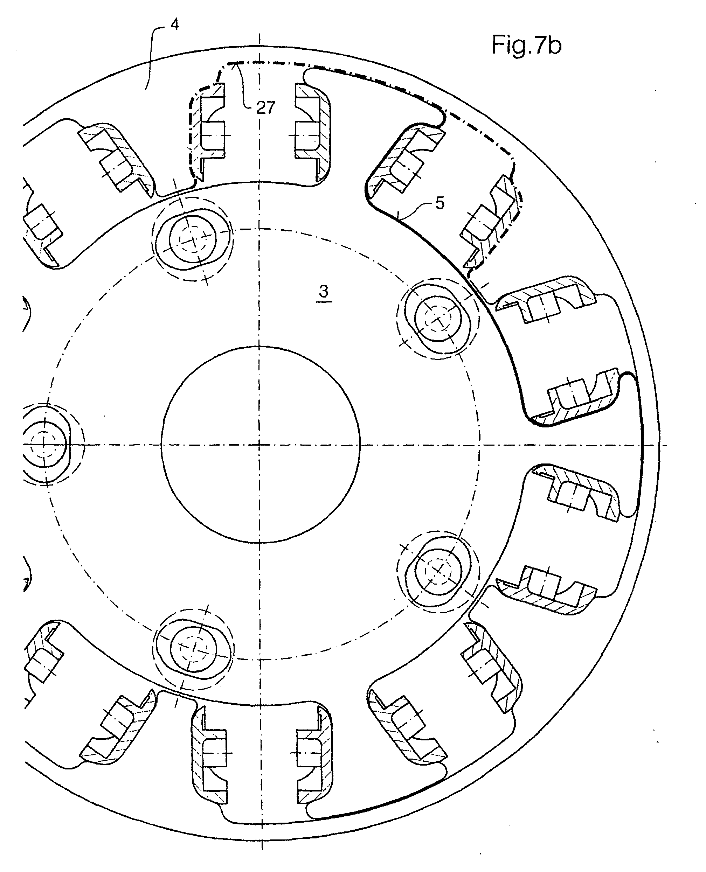

In der Figur 7a ist demgegenüber eine Ausführung eines Schwingungstilgers entsprechend Fig. 1 in sogenannter Zweischeibenbauart dargestellt. Die Primärmasse 3 umfaßt dabei lediglich ein scheibenförmiges Element 3.1, während die Sekundärmasse 4 ebenfalls lediglich ein scheibenförmiges Element 4.1 umfaßt. Diese Ausführung stellt eine besonders kompakte Gestaltung eines Schwingungstilgers dar. Die Anordnung der Federelemente bzw. Federeinrichtungen erfolgt analog zu Fig. 1 und ist in Fig. 7b wiedergegeben. Die Führungen der Federelemente an den einzelnen Massen unterscheidet sich von der in Figur 1 dargestellten Ausführung dadurch, daß die Ausnehmungen an der Sekundärmasse nicht am Außenumfang dieser angeordnet und randoffen sind.

Eine weitere vorzugsweise eingesetzte Maßnahme zur Reduzierung von unerwünscht auftretenden Resonanzen besteht in der Einstellung der zwischen den einzelnen relativ zueinander bewegbaren Elementen des Schwingungstilgers vorgesehenen Spalte und Flächen zum Zwecke der Verringerung der sogenannten Scherdämpfung, welche sich einstellt bei Relativbewegung von Flüssigkeit gegenüber festen Körpern. Die Einstellung erfolgt dabei über entsprechende axiale Lagerung der einzelnen relativ zueinander in Umfangsrichtung bewegbaren Elemente.

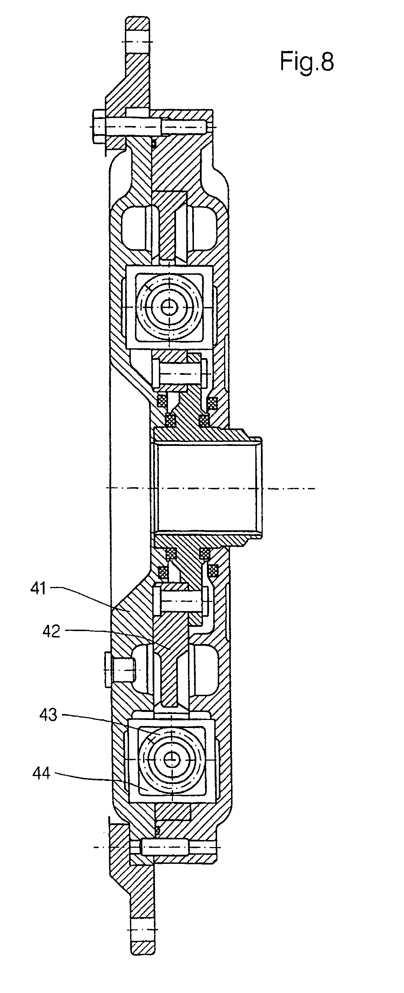

Die erfindungsgemäße Anordnung der Federelemente einer Federeinrichtung ist ebenfalls für eine Vorrichtung zur Schwingungsdämpfung in Form eines Torsionsschwingungsdämpfers gemäß Fig. 8 einsetzbar. Der Torsionsschwingungsdämpfer umfaßt zwei Schwungmassen, eine erste Schwungmasse 41 und eine zweite Schwungmasse 42. Die eine der beiden Schwungmassen ist dabei drehfest mit der Antriebseite im Traktionsbetrieb betrachtet, insbesondere einem Verbrennungsmotor, verbindbar, während die andere bei Kraftflußrichtung im Traktionsbetrieb von der Antriebsmaschine zum Abtrieb betrachtet abtriebseitig zweite Schwungmasse 42 z.B. mit einer Getriebeeingangswelle verbindbar ist. Die beiden Schwungmassen 41 und 42 sind in Umfangsrichtung relativ zueinander begrenzt verdrehbar, und zwar entgegen der Kraft der Federeinrichtungen 43, welche über den Umfang des Torsionsschwingungsdämpfers verteilt angeordnet sind. Die Federeinrichtungen befinden sich beispielsweise innerhalb einer Dämpfungskammer 44, welche mit Fett befüllt sein kann.

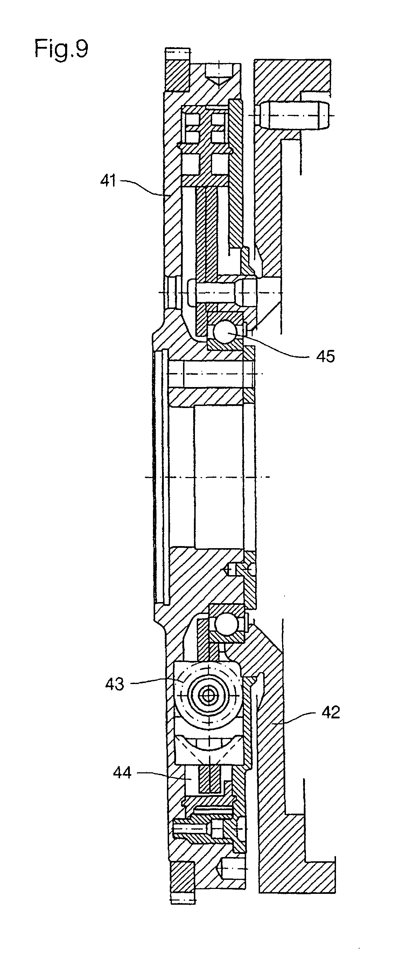

In der Figur 9 ist eine konkrete Ausführung eines Torsionsschwingungsdämpfers in Form eines Zweimassenschwungrades 45 dargestellt. Dieses weist ebenfalls zwei Schwungmassen 41 und 42 auf, die über ein Lager 46 aufeinander gelagert sind. Die eine der beiden Schwungmassen, die antriebseitige Schwungmasse 41 ist drehfest mit der Antriebseite im Traktionsbetrieb betrachtet, insbesondere mit einer Verbrennungskraftmaschine verbindbar, während die andere der ersten Schwungmasse 41 im Traktionsbetrieb betrachtet nachgeordnete zweite Schwungmasse 42, die abtriebseitige Schwungmasse, mit einer Reibungskupplung verbindbar ist. Dabei besteht die Möglichkeit, daß bereits die abtriebseitige Schwungmasse eine Reibfläche der Reibungskupplung bildet. Auch hier sind wiederum Federeinrichtungen 45 vorgesehen sowie eine Dämpfungskammer 44. Diese ist ganz oder teilweise mit Fett befüllt. Die Federeinrichtungen sind entsprechend den Figuren 1 bis 7 ausgeführt.

## Patentansprüche

1. Vorrichtung zur Schwingungsdämpfung an rotierenden Bauelementen
1.1 mit zwei Schwungmassen - einer Primärmasse und einer Sekundärmasse -, die in Umfangsrichtung relativ zueinander begrenzt verdrehbar sind;
1.2 die Primärmasse und die Sekundärmasse sind über eine Dämpfungsund Federkopplung miteinander koppelbar;
1.3 mit Mitteln zur Realisierung der Federkopplung, umfassend wenigstens eine Federeinrichtung;
1.4 jede Federeinrichtung umfaßt mindestens zwei in Umfangsrichtung hintereinander angeordnete Federelemente - ein erstes Federelement und ein zweites Federelement;
**gekennzeichnet durch** die folgenden Merkmale:
1.5 das einzelne Federelement der Federeinrichtung ist vorgespannt und stützt sich an der Primärmasse und der Sekundärmasse ab;
1.6 die Federelemente einer Federeinrichtung sind derart der Primärmasse und der Sekundärmasse zugeordnet, daß sie eine gegenseitige Abstützung erfahren.

2. Vorrichtung zur Schwingungsdämpfung nach Anspruch 1, **dadurch gekennzeichnet, daß** die Vorspannung der einzelnen Federelemente einer Federeinrichtung derart bemessen ist, daß bei vollständiger Einfederung des ersten Federelementes aufgrund der Relativbewegung der beiden Schwungmassen das andere zweite Federelement eine Vorspannung bestimmter, jedoch geringerer Größe aufweist.

3. Vorrichtung nach einem der Ansprüche 1 oder 2, **dadurch gekennzeichnet, daß** die Federelemente als Druckfedern ausgeführt sind.

4. Vorrichtung nach einem der Ansprüche 1 oder 2, **dadurch gekennzeichnet, daß** die Federn als Zugfedern ausgeführt sind.

5. Vorrichtung nach einem der Ansprüche 1 bis 4, **gekennzeichnet durch** die folgenden Merkmale:
5.1 die Primärmasse umfaßt in Umfangsrichtung verlaufende erste Ausnehmungen;
5.2 die Sekundärmasse umfaßt in Einbaulage in Mittenlage (Verdrehwinkel = 0) zu den ersten Ausnehmungen an der Primärmasse hinsichtlich deren Abstand und Größe im wesentlichen komplementär ausgefühete zweite Ausnehmungen, die in Umfangsrichtung um einen Teil der Erstreckung der Ausnehmungen an der Primärmasse in Umfangsrichtung unter Bildung wenigstens zweier Aufnahmebereiche für die Federelemente versetzt zu diesen angeordnet sind;
5.3 iedem Federelement ist an den Federenden jeweils ein Führungskörper zugeordnet, an welchem jeweils die beiden Massen - Primärmasse und Sekundärmasse - im Bereich der Ausnehmungen tangential angreifen.

6. Vorrichtung nach Anspruch 5, dadurch gekenneichnet, daß in Mittenlage Primärmasse und Sekundärmasse derart zueinander angeordnet sind, daß beide Aufnahmebereiche in Umfangsrichtung gleiche Abmessungen aufweisen.

7. Vorrichtung nach einem der Ansprüche 1 bis 6, **dadurch gekennzeichnet, daß** die Steifigkeit der Federkopplung über die Anzahl und/oder Auslegung der einzelnen Federeinrichtungen erfolgt.

8. Vorrichtung nach einem der Ansprüche 1 bis 7, **dadurch gekennzeichnet, daß** diese als Schwingungstilger mit den folgenden Merkmalen ausgeführt ist:
8.1 die Primärmasse ist mit dem rotierenden Bauelement wenigstens mittelbar drehfest koppelbar,
8.2 die Sekundärmasse ist frei von einer drehfesten Kopplung mit einem rotierenden Bauteil.

9. Vorrichtung nach einem der Ansprüche 1 bis 7, **dadurch gekennzeichnet, daß** diese als Schwingungsdämpfungseinrichtung mit den folgenden Merkmalen ausgeführt ist:
9.1 die Primärmasse ist mit einem antriebseitig rotierenden Bauelement wenigstens mittelbar drehfest koppetbar;
9.2 die Sekundärmasse ist mit einem abtriebseitigen Bauelement drehfest koppelbar;
9.3 die Sekundärmasse bildet ein Element einer Kupplungseinrichtung.

10. Vorrichtung nach einem der Ansprüche 1 bis 9, **dadurch gekennzeichnet, daß** die Sekundärmasse 2 scheibenförmige Elemente umfaßt, welche im Axialschnitt betrachtet beidseitig der Primärmasse angeordnet sind.

11. Vorrichtung nach einem der Ansprüche 1 bis 9, **dadurch gekennzeichnet, daß** die Primärmasse und die Sekundärmasse jeweils als ein scheibenförmiges Element ausgeführt sind.

12. Vorrichtung nach einem der Ansprüche 1 bis 11, **dadurch gekennzeichnet, daß** Mittel zur Realisierung einer Dämpfungskopplung vorgesehen sind.

13. Vorrichtung zur Schwingungsdämpfung nach Anspruch 12, dadruch gekennzeichnet, daß das Mittel zur Dämpfungskopplung wenigstens ein elastisches Element, welches zwischen der Primärmasse und der Sekundärmasse angeordnet ist, umfaßt.

14. Vorrichtung zur Schwingungsdämpfung nach einem der Ansprüche 12 oder 13, **gekennzeichnet durch** die folgenden Merkmale:
14.1 das Mittel zur Dämpfungskopplung umfaßt wenigstens ein Hydraulikflüssigkeitsversorgungssystem;
14.2 das Hydraulikflüssigkeitversorgungssystem ist mit einem Zwischenraum zwischen Primärmasse und Sekundärmasse gekoppelt.

15. Vorrichtung zur Schwingungsdämpfung nach einem der Ansprüche 1 bis 14, **dadurch gekennzeichnet, daß** weitere dritte Mittel zur Begrenzung des Verdrehwinkels der Primärmasse.gegenüber der Sekundärmasse in Umfangsrichtung vorgesehen sind.

16. Vorrichtung zur Schwingungsdämpfung nach Anpruch 15, **gekennzeichnet durch** die folgenden Merkmale:
16.1 das dritte Mittel umfaßt wenigstens einen an der Sekundärmasse angeordneten Vorsprung;
16.2 der Vorsprung greift in Aussparungen an der Primärmasse in Einbaulage in Umfangsrichtung derart ein, daß dieser relativ gegenüber der Primärmasse verschiebbar ist;
16.3 die Aussparungen an der Primärmasse in Umfangsrichtung bilden einen Anschlag für den Vorsprung der Sekundärmasse.

17. Vorrichtung zur Schwingungsdämpfung nach Anspruch 16, **dadurch gekennzeichnet, daß** der Vorsprung über ein Verbindungselement in Form einer Schraube realisiert wird.

18. Vorrichtung nach einem der Ansprüche 5 bis 17, **dadurch gekennzeichnet, daß** wenigstens die Führungselemente, an welchem die Sekundärmasse angreift, axial in der Sekundärmasse geführt sind.

19. Vorrichtung nach Anspruch 18, **dadurch gekennzeichnet, daß** die axiale Führung mittels blechförmigen Elementen, welche der Sekundärmasse zugeordnet sind, erfolgt.

20. Vorrichtung nach einem der Ansprüche 1 bis 17, **dadurch gekennzeichnet, daß** die einem Federelement zugeordneten Führungselemente mit unterschiedlicher Abmessung in axialer Richtung ausgeführt sind.

## Claims

1. An apparatus for damping oscillations in rotating components,
1.1 with two flywheel masses, a primary flywheel mass and a secondary flywheel mass, which can be rotated in a limited fashion in the circumferential direction relative with respect to each other;
1.2 with the primary flywheel mass and the secondary flywheel mass being capable of being coupled with each other via a damping and spring coupling;
1.3 with means for realizing the spring coupling, comprising at least one spring device;
1.4 with each spring device comprising at least two spring elements which are arranged successively in the circumferential direction, namely a first spring element and a second spring element,
**characterized by** the following features:
1.5 the individual spring element of the spring device is pre-tensioned and rests on the primary flywheel mass and the secondary flywheel mass;
1.6 the spring elements of a spring device are associated with the primary flywheel mass and the secondary flywheel mass in such a way that they are subjected to a mutual support.

2. An apparatus for oscillation damping as claimed in claim 2, **characterized in that** the pre-tensioning of the individual spring elements of a spring device is dimensioned in such a way that in the case of complete spring deflection of the first spring element due to the relative movement of the flywheel masses the second spring element is provided with a pre-tensioning of a specific magnitude which is lower however.

3. An apparatus as claimed in one of the claims 1 or 2, **characterized in that** the spring elements are configured as compression springs.

4. An apparatus as claimed in one of the claims 1 or 2, **characterized in that** the springs are arranged as tension springs.

5. An apparatus as claimed in one of the claims 1 to 4, **characterized by** the following features:
5.1 the primary flywheel mass comprises first recesses extending in the circumferential direction;
5.2 the secondary flywheel mass comprises in the mounted position in the middle position (angle of rotation = 0) second recesses which are provided with a configuration which is substantially configured in a complementary fashion to the first recesses in the primary flywheel mass with respect to their distance and size, which second recesses are arranged in the circumferential direction offset by a part of the extension of the recesses in the primary flywheel mass in the circumferential direction by forming at least two receiving areas for the spring elements;
5.3 a guide body is associated to each spring element at the spring ends, on which guide body the two flywheel masses (primary flywheel mass and secondary flywheel mass) attack tangentially in the region of the recesses.

6. An apparatus as claimed in claim 5, **characterized in that** in the middle position the primary and secondary flywheel masses are arranged in such a way with respect to each other that both receiving areas in the circumferential direction have the same dimensions.

7. An apparatus as claimed in one of the claims 1 to 6, **characterized in that** the stiffness of the spring coupling occurs through the number and/or configuration of the individual spring devices.

8. An apparatus as claimed in one of the claims 1 to 7, **characterized in that** it is configured as an oscillation damper with the following features:
8.1 the primary flywheel mass can be coupled with the rotating component at least indirectly in a torsionally rigid fashion;
8.2 the secondary flywheel mass is free from any torsionally rigid coupling with a rotating component.

9. An apparatus as claimed in one of the claims 1 to 7, **characterized in that** it is configured as an oscillation damping device with the following features:
9.1 the primary flywheel mass can be coupled with a rotating component on the drive side at least indirectly in a torsionally rigid fashion;
9.2 the secondary flywheel mass can be coupled in a torsionally rigid fashion with a component on the driven side;
9.3 the secondary flywheel mass forms an element of a coupling device.

10. An apparatus as claimed in one of the claims 1 to 9, **characterized in that** the secondary flywheel mass comprises two disk-like elements which, when seen in an axial sectional view, are arranged on both sides of the primary flywheel mass.

11. An apparatus as claimed in one of the claims 1 to 9, **characterized in that** the primary flywheel mass and the secondary flywheel mass are each configured as a disk-like element.

12. An apparatus as claimed in one of the claims 1 to 11, **characterized in that** means for realizing a damping coupling are provided.

13. An apparatus for oscillation damping as claimed in claim 12, **characterized in that** the means for damping coupling comprises at least one elastic element which is disposed between the primary flywheel mass and the secondary flywheel mass.

14. An apparatus for oscillation damping as claimed in one of the claims 12 or 13, **characterized by** the following features:
14.1 the means for damping coupling comprises at least one hydraulic liquid supply system;
14.2 the hydraulic liquid supply system is coupled with an intermediate space between primary flywheel mass and secondary flywheel mass.

15. An apparatus for damping oscillations as claimed in one of the claims 1 to 14, **characterized in that** further third means are provided for limiting the angle of rotation of the primary flywheel mass relative to the secondary flywheel mass in the circumferential direction.

16. An apparatus for damping oscillations as claimed in claim 15, **characterized by** the following features:
16.1 the third means comprises at least one projection arranged on the secondary flywheel mass;
16.2 the projection engages in recesses on the primary flywheel mass in the mounted position in the circumferential direction in such a way that the same is displaceable relative to the primary flywheel mass;
16.3 the recesses on the primary flywheel mass in the circumferential direction form a stop for the projection of the secondary flywheel mass.

17. An apparatus for damping oscillations as claimed in claim 16, **characterized in that** the projection is realized via a connecting element in the form of a screw.

18. An apparatus as claimed in one of the claims 5 to 17, **characterized in that** at least the guide elements on which the secondary flywheel mass attacks are guided axially in the secondary flywheel mass.

19. An apparatus as claimed in claim 18, **characterized in that** the axial guidance is provided by means of sheet-like elements which are associated with the secondary flywheel mass.

20. An apparatus as claimed in one of the claims 1 to 17, **characterized in that** the guide elements associated with a spring element are arranged with different dimensions in the axial direction.

## Revendications

1. Dispositif pour l'amortissement d'oscillations dans des éléments en rotation,
1.1 avec deux masses oscillantes, une masse primaire et une masse secondaire, capables d'une rotation limitée l'une par rapport à l'autre dans le sens de la circonférence ;
1.2 la masse primaire et la masse secondaire pouvant être couplées l'une avec l'autre par un couplage avec amortissement et à ressort ;
1.3 avec des moyens pour la réalisation du couplage à ressort comprenant au moins un dispositif à ressort ;
1.4 chaque dispositif à ressort comprenant au moins deux éléments de ressort disposés l'un derrière Vautre dans le sens de la circonférence, un premier élément de ressort et un second élément de ressort; **caractérisé en ce que**:
1.5 chaque élément de ressort du dispositif à ressort est précontraint et s'appuie sur la masse primaire et sur la masse secondaire ;
1.6 les éléments de ressort d'un dispositif à ressort sont associés à la masse primaire et à la masse secondaire de telle sorte qu'ils s'appuient les uns sur les autres.

2. Dispositif pour l'amortissement d'oscillations selon la revendication 1,
**caractérisé en ce que** la précontrainte des différentes éléments de ressort d'un dispositif à ressort est dimensionnée de telle sorte que lorsque le premier élément de ressort est complètement repoussé sous l'effet du mouvement relatif des deux masses oscillantes, l'autre élément de ressort présente une précontrainte d'une grandeur définie mais plus faible.

3. Dispositif selon l'une quelconque des revendications 1 ou 2, **caractérisé en ce que** les éléments de ressort sont conçus comme des ressorts de compression.

4. Dispositif selon l'une quelconque des revendications 1 ou 2, **caractérisé en ce que** les ressorts sont conçus comme des ressorts de traction.

5. Dispositif selon l'une quelconque des revendications 1 à 4, **caractérisé en ce que** :
5.1 la masse primaire-comprend-des premiers évidements orientés dans le sens de la circonférence ;
5.2 la masse secondaire comprend des deuxièmes évidements sensiblement complémentaires des premiers évidemment dans la masse primaire en termes d'écartement et de taille dans la position de montage en position médiane (angle de rotation = 0), qui sont décalés par rapport à ceux-ci dans le sens de la circonférence d'une partie de l'étendue des évidements de la masse primaire dans le sens de la circonférence en formant au moins deux zones de réception pour les éléments de ressort ;
5.3 chaque élément de ressort est aux extrémités du ressort associé à un organe de guidage, sur lequel les deux masses, masse primaire et masse secondaire, se mettent en prise de façon tangente au niveau des évidements.

6. Dispositif selon la revendication 5, **caractérisé en ce que** dans la position médiane, la masse primaire et la masse secondaire sont disposées l'une par rapport à l'autre de telle sorte que les deux zones de réception aient les mêmes dimensions dans le sens de la circonférence.

7. Dispositif selon l'une quelconque des revendications 1 à 6, **caractérisé en ce que** la rigidité du couplage à ressort dépend du nombre et (ou) de la conception des différents dispositifs à ressort.

8. Dispositif selon l'une quelconque des revendications 1 à 7, **caractérisé en ce qu'**il est conçu comme un amortisseur d'oscillations ayant les caractéristiques suivantes:
8.1 la masse primaire peut être couplée de manière solidaire en rotation, au moins indirectement, avec l'élément en rotation ;
8.2 la masse secondaire n'est pas couplée de manière solidaire en rotation avec un élément en rotation.

9. Dispositif selon l'une quelconque des revendications 1 à 7, **caractérisé en ce qu'**il est conçu comme un dispositif amortisseur d'oscillations ayant les caractéristiques suivantes:
9.1 la masse primaire peut être couplée de manière solidaire en rotation, au moins indirectement, avec un élément en rotation du côté de l'entraînement ;
9.2 la masse secondaire peut être couplée de manière solidaire en rotation avec un élément du côté de la sortie ;
9.3 la masse secondaire constitue un élément d'un dispositif de couplage.

10. Dispositif selon l'une quelconque des revendications 1 à 9, **caractérisé en ce que** la masse secondaire 2 comprend des éléments en forme de disque, qui sont disposés de part et d'autre de la masse primaire en coupe axiale.

11. Dispositif selon l'une quelconque des revendications 1 à 9, **caractérisé en ce que** la masse primaire et la masse secondaire sont conformées chacune comme un élément en forme de disque.

12. Dispositif selon l'une quelconque des revendications 1 à 11, **caractérisé en ce que** des moyens sont prévus pour réaliser un couplage avec amortissement.

13. Dispositif pour l'amortissement d'oscillations selon la revendication 12, **caractérisé en ce que** le moyen de couplage avec amortissement comprend au moins un élément élastique disposé entre la masse primaire et la masse secondaire.

14. Dispositif pour l'amortissement d'oscillations selon l'une quelconque des revendications 12 ou 13, **caractérisé en ce que**:
14.1 le moyen de couplage avec amortissement comprend au moins un système d'alimentation en liquide hydraulique ;
14.2 le système d'alimentation en liquide hydraulique est couplé avec un espace intermédiaire ménagé entre la masse primaire et la masse secondaire.

15. Dispositif pour l'amortissement d'oscillations selon l'une quelconque des revendications 1 à 14, **caractérisé en ce que** des troisièmes moyens sont prévus pour limiter l'angle de rotation de la masse primaire par rapport à la masse secondaire dans le sens de la circonférence.

16. Dispositif pour l'amortissement d'oscillations selon la revendication 15, **caractérisé en ce que**:
16.1 le troisième moyen comprend au moins une saillie disposée sur la masse secondaire ;
16.2 la saillie se met en prise dans des évidements de la masse primaire dans la position de montage dans le sens de la circonférence, de telle sorte qu'elle est mobile par rapport à la masse primaire ;
16.3 les évidements de la masse primaire dans le sens de la circonférence forment une butée pour la saillie de la masse secondaire.

17. Dispositif pour l'amortissement d'oscillations selon la revendication 16,
**caractérisé en ce que** la saillie peut être formée par un élément d'assemblage prenant la forme d'une vis.

18. Dispositif pour selon l'une quelconque des revendications 5 à 17,
**caractérisé en ce qu'**au moins les éléments de guidage sur lesquels la masse secondaire se met en prise sont guidés dans le sens axial dans la masse secondaire.

19. Dispositif selon la revendication 18, **caractérisé en ce que** le guidage axial est réalisé par des éléments en forme de tôles associés à la masse secondaire.

20. Dispositif selon l'une quelconque des revendications 1 à 17, **caractérisé en ce que** les éléments de guidages associés à un élément de ressort sont construits avec des dimensions différentes dans le sens axial.
